# EUROPEAN PATENT SPECIFICATION

(11) **EP 2 127 563 B1**
(45) Date of publication and mention of the grant of the patent: **25.04.2012**
(21) Application number: 09007148.1
(22) Date of filing: 28.05.2009
(51) Int. Cl.: A47D 13/02

(54) **Mechanism for adjusting a back support of a baby carrier**
Mechanismus zur Einstellung der Rückenlehne einer Kindertrage
Mécanisme d'ajustement d'un support dorsal d'un porte-bébé

(30) Priority: 30.05.2008 CN 200820048634 U
(43) Date of publication of application: 02.12.2009
(73) Proprietor: Lerado (Zhong Shan) Industrial Co., Ltd., Zhong Shan City Guangdong (CN)
(72) Inventor: Wang, Chin Hui, Chiayi City (TW); Wang, Pei Yu, Changhua County 516 (TW)
(74) Representative: Wagner, Bernhard Peter

(56) References cited:
- CN-Y- 2 719 126
- GB-A- 2 290 229

## Description

### BACKGROUND OF THE INVENTION

### FIELD OF THE INVENTION

The present invention relates generally to a mechanism for adjusting a back support board in baby carrier. More particularly, the present invention relates to a mechanism with a knob for driving a reduction gear set, by turning the knob that users can adjust the inclination of the back support board within an angle range.

### DESCRIPTION OF THE RELATED ART

Baby carrier is mainly used for accommodating a new born baby or infant to rest or sleep therein during transport of the baby either by car or on foot. For more comfortable, the baby carrier typically has equipped with an adjustable back support board. The adjustable back support board is supported by a support member beneath the board in various positions, so as to keep the adjustable back support board in different inclined positions. Before adjusting the inclination angle of the back support board, parents should hold the baby up to change position of the support member; however, a drawback is, when a sleeping baby is hold up, would be waken thereafter.

To prevent the disturbing from a sleeping baby in the baby carrier while adjusting the back support board, a better mechanism disclosed in Taiwan Patent No. M263849 (=CN2719126Y) is provided. The patented mechanism is installed at one side of a baby carrier, having a back support board pivoted to the base of the baby carrier, a U-shaped support rod slidably supported the back support board, and a lifter pivotally connected with the U-shaped support rod with one end to lift or down for adjusting the back support board in inclination angles. The shortcoming is when the lifter has not positioned properly, the back support board may suddenly fall against the base, that would damages the baby's head.
GB 2 290 229 A discloses a mechanism for adjusting a back support of a baby carrier as described in the preamble of claim 1.

### SUMMARY OF THE INVENTION

To overcome the shortcomings, the present invention intends to provide an improved mechanism to obviate the aforementioned problems.

This object is achieved by the mechanism for adjusting a back support of a baby carrier according to claim 1. Refinements and developments of the invention are described in the dependent claims.

The mechanism for adjusting a back support of a baby carrier includes an adjustable back support board of a baby carrier, a support mechanism, and an adjustment mechanism. The adjustable back support board has one end pivoted to the baby carrier, and a connecting portion pivoted to the support mechanism. The adjustment mechanism has a reduction gear set, a knob, and a driving force transmitting part. By turning the knob, transmitting by the reduction gear set, the support mechanism is driven to rotate the adjustable back support board into a various reclined positions. It would be more convenient to user to adjust the adjustable back support board, and more safe to a baby when it is being accommodated in the baby carrier.

Additional features and advantages of the invention will be set forth in the description to follow, and in part will be apparent from the description, or may be learned by practice of the invention. The objectives and other advantages of the invention will be realized and attained by the structure particularly pointed out in the written description and claims as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention are incorporated in and constitute a part of this specification, illustrate embodiments of the invention and together with the description serve to explain the principles of the invention. In the drawings:

FIG. 1 is a perspective view illustrated a baby carrier with a mechanism according to the principle of the present invention for adjusting the back support thereof;

FIG. 2 is a partial cross-sectional and exploded perspective view illustrated the embodiment of the mechanism;

FIG. 3 is a partial cross-sectional perspective view illustrated the embodiment of the mechanism;

FIG. 4 is a cross-sectional view illustrated a baby carrier with the mechanism according to the principle of the present invention for adjusting the back support thereof;

FIG. 5 is a an exploded perspective view illustrated the embodiment of the reduction gear set and the manipulating element;

FIG. 6 is a cross-sectional view illustrated the moving relation between the reduction gear set and the manipulating element;

FIG. 7 is a cross-sectional schematic view showing the moving relation between the driving force transmitting part, the support mechanism and the adjustable back support board;

FIG. 8 is a schematic view showing the moving relation between the driving gear of adjustment mechanism and the geared portion of the driving force transmitting part.

FIG. 9 is a cross-sectional schematic view showing the moving relation between the driving force transmitting part, the U-shaped support rod, and the adjustable back support board; wherein the adjustable back support board is positioned in a position paralleled to the driving force transmitting part, and the slant is abutted against the adjustable back support board for helping the adjustment of the adjustable back support board; and

FIG. 10 is a cross-sectional schematic view showing an alternative embodiment of the support mechanism.

### DETAILED DESCRIPTION OF THE PREFERRED EMBODIMENTS

The following description is provided to enable any person skilled in the art to make and use the invention and sets forth the best modes contemplated by the inventors of carrying out their invention. Various modifications, however, will remain readily apparent to those skilled in the art.

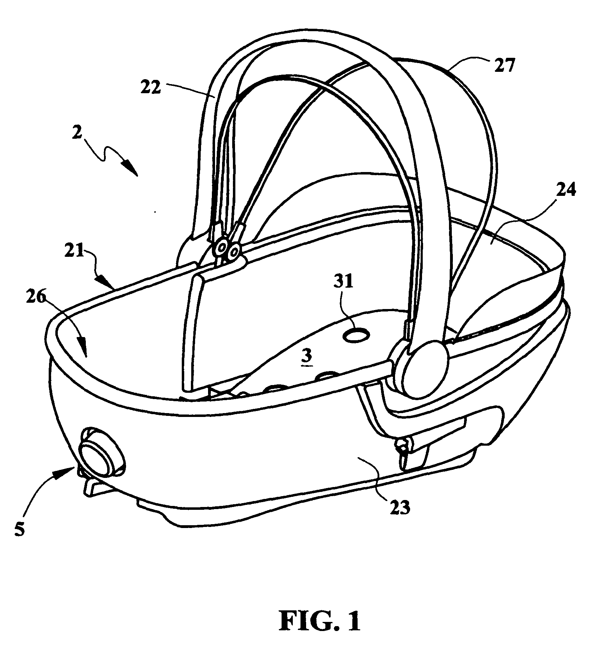

Referring to FIGS. 1 to 3, a baby carrier 2 with a novel mechanism according to the principle of the present invention used for adjusting a back support thereof is illustrated. The baby carrier 2 comprises a main body 21 which has a pair of longitudinal walls 23, a pair of transversal wall 24, and a base portion 25 that provides an accommodating space 26 for an infant or baby therein. The baby carrier 2 has a handle bar 22 which is pivotally connected to the main body 21 at the longitudinal walls 23 for conveniently carrying the baby by hand. Selectively, a canopy support rod 27 may be mounted on the main body 21 for supporting a canopy that can shield the baby stayed in the accommodating space 26 from too much sunshine.

The mechanism in embodiment of the present invention comprises at least an adjustable back support board 3, a support mechanism 4, and an adjustment mechanism 5.

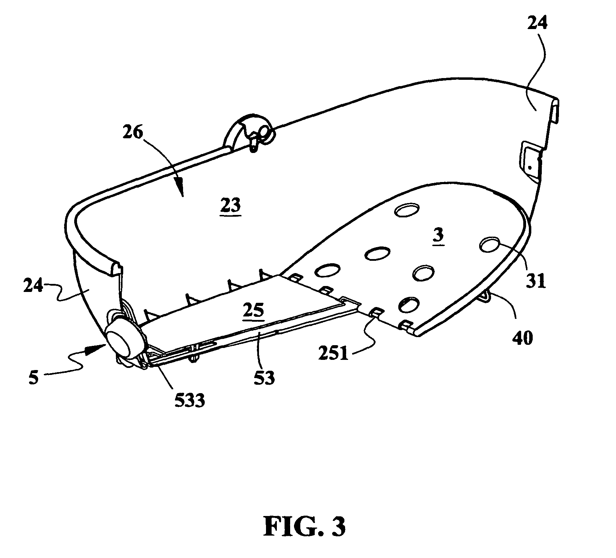

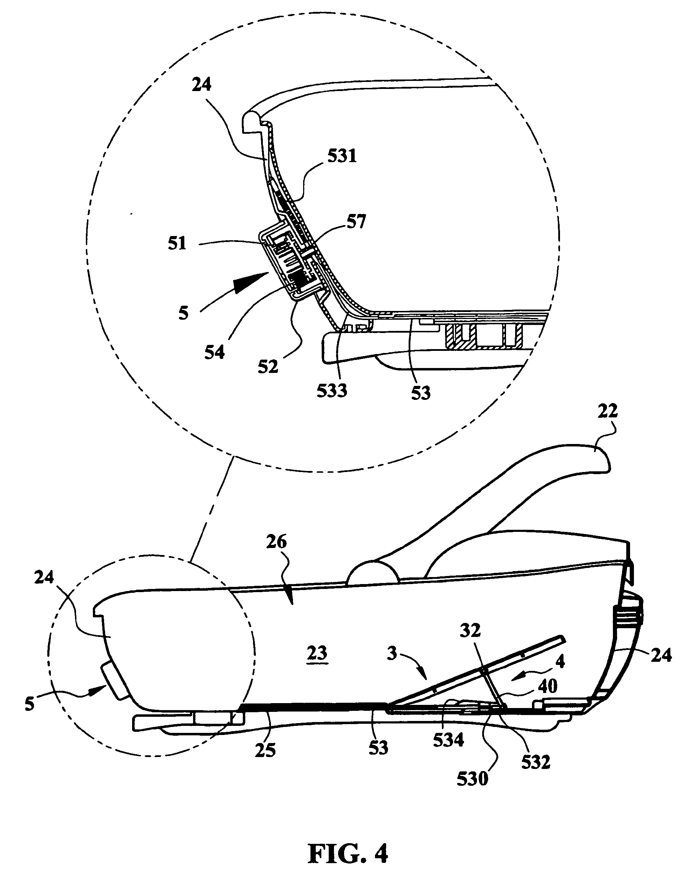

Referring to FIGS. 3 and 4, the adjustable back support board 3 has one end pivoted to a pivot portion 251 mounted on base portion 25 thereby permitting it to adjust in angle within a range from 0° to 60°. The adjustable back support board 3 may be formed in one piece with a connecting portion 32 at which pivotally connected with the support mechanism 4. Preferably, the adjustable back support board 3 may be formed with a plurality of ventilation orifices 31 for adding the ventilation in the accommodating space 26.

The support mechanism 4 is pivoted between the adjustment mechanism 5 and the adjustable back support board 3, and driven by the adjustment mechanism 5 for supporting the adjustable back support board 3 in a various inclined positions. In a preferred present embodiment, the support mechanism 4 may be a U-shaped support rod 40 with two ends pivoted to the connecting portion 32 formed beneath the adjustable back support board 3, and a middle portion pivoted to the adjustment mechanism 5.

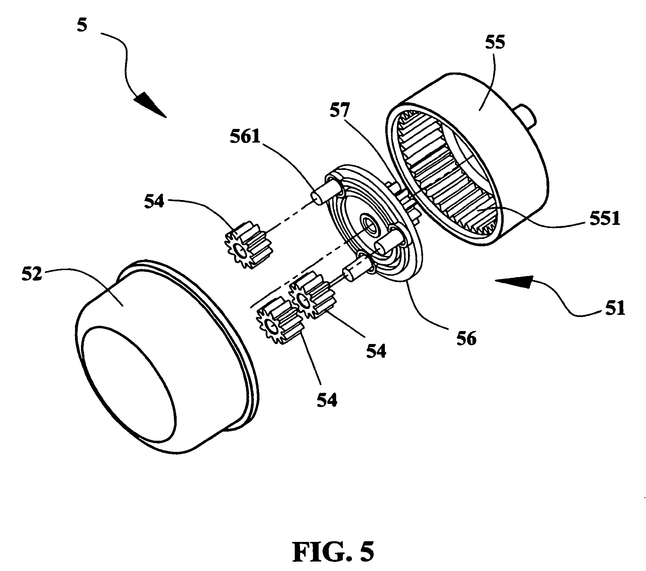

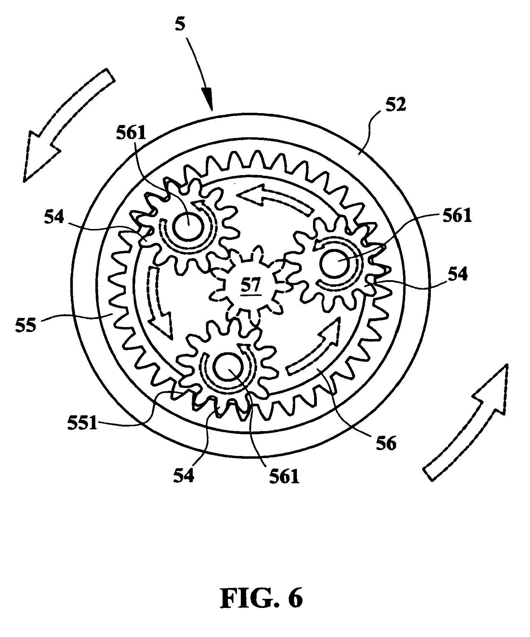

Referring to FIGS. 5 to 6, the adjustment mechanism 5 comprises a reduction gear set 51, a manipulating element 52, and a driving force transmitting part 53. The manipulating element 52 may be embodied as a knob or cup-shaped element pivotally mounted on one side of the transversal walls 24, which can be hold and turned by user to drive the driving force transmitting part 53.

The reduction gear set 51 includes a plurality of planetary gears 54, an annular gear wheel 55 and a gear carrier 56.

The gear carrier 56 has a plurality of stab shafts 561 extended from one side, and a driving gear 57 extended from another side through a notch or hole 241 of the transversal wall 24 into the main body 21, and therefore engaged with the driving force transmitting part 53.

The planetary gears 54 each is pivoted on the stab shaft 561 respectively and engaged with the gear portion 551 of the annular gear wheel 55 thereby receiving the rotation torque from the manipulating element 52 via the annular gear wheel 55. As the annular gear wheel 55 is fixed to the manipulating element 52, when user rotates the manipulating element 52, the annular gear wheel 55 is rotated. When the planetary gears 54 are rotated, the gear carrier 56 and the driving gear 57 are driven to rotate simultaneously.

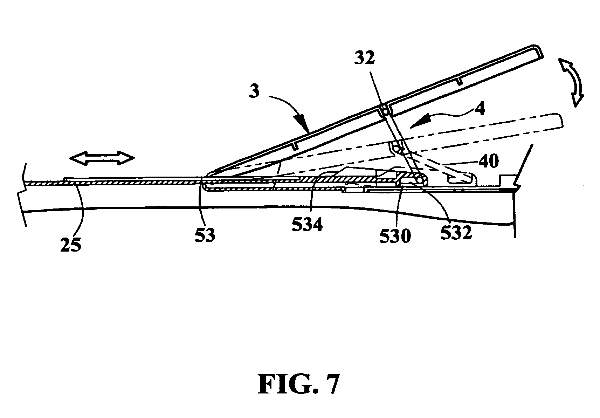

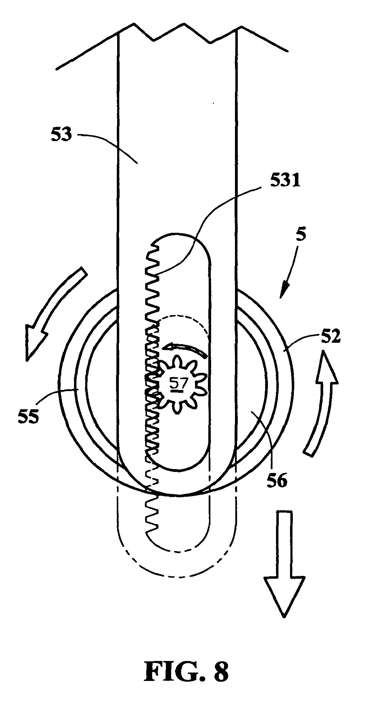

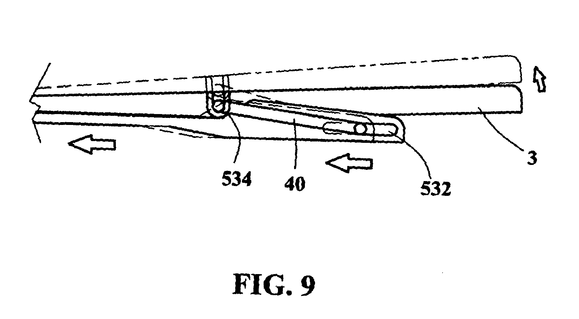

Referring to FIG. 8, the driving force transmitting part 53 has one end formed with a geared portion 531 for engaging with the driving gear 57. Referring back to FIG. 7, the driving force transmitting part 53 has another end formed a pivot portion 530 which may be embodied as an elongated slot 532 for pivotally engaging with the middle portion of the U-shaped support rod 40. Whenever the driving gear 57 is rotated, the driving force transmitting part 53 will be driven either back or forth thereby to move the support mechanism 4 to rotate the adjustable back support board 3. Preferably, the driving force transmitting part 53 may be formed with a slant 534 near the pivot portion 530. As illustrated in FIG. 9, when the adjustable back support board 3 is stayed in a position paralleled to the driving force transmitting part 53, and the driving force transmitting part 53 is pulled to move, the slant 534 can serve to push the adjustable back support board 3 to rotate upwardly.

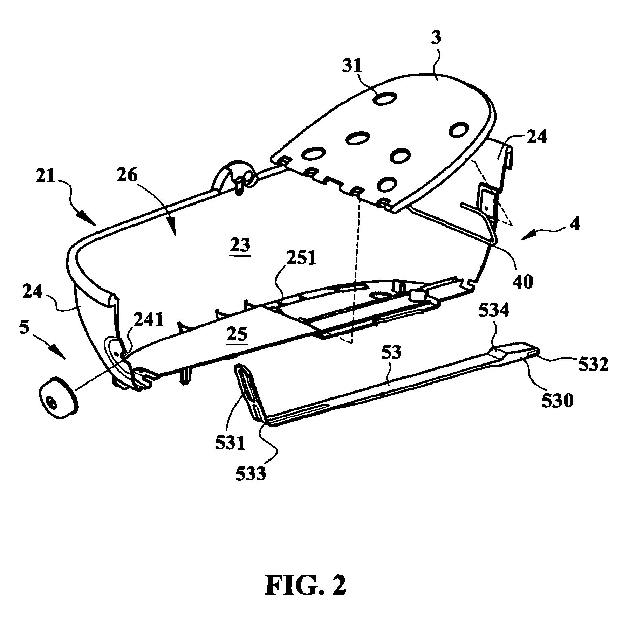

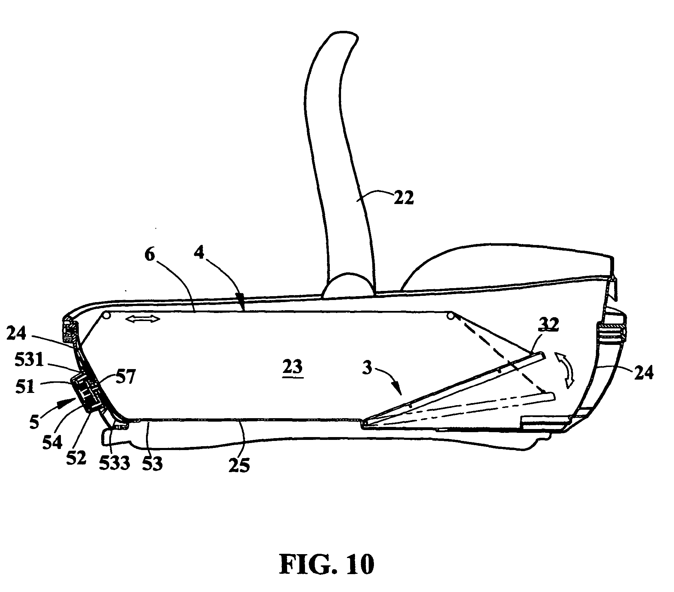

Although the preferred example of support mechanism 4 can be a U-shaped support rod 40 as shown in FIG. 2, however, the support mechanism 4 can be a pair of flexible wires 6 connected between the adjustable back support board 3 and the driving force transmitting part 53, as the alternative embodiment illustrated in FIG. 10. Whenever the driving force transmitting part 53 is driven by the adjustment mechanism 5, the pair of flexible wires 6 is pulled, and the adjustable back support board 3 is driven to a different inclined position.

Although certain apparatus constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

Those skilled in the art will appreciate that various adaptations and modifications of the just-described preferred embodiment can be configured without departing from the scope of the invention. Therefore, it is to be understood that, within the scope of the appended claims, the invention may be practiced other than as specifically described herein.

## Claims

1. A mechanism for adjusting a back support of a baby carrier (2) having a main body (21) formed with an accommodating space (26) for receiving a baby, the mechanism comprising;
- an adjustable back support board (3) pivoted to the main body (21) within the accommodating space (26) to support the baby;
- an adjustment mechanism (5) mounted to one side of the main body (21), said adjustment mechanism (5) comprising a reduction gear set (51);
- a support mechanism (4) pivoted between the adjustment mechanism (5) and the adjustable back support board (3); and
- a driving force transmitting part (53) movably connected between the adjustment mechanism (5) and the support mechanism (4), said driving force transmitting part (53) can be driven by a user's hand through the reduction gear set (51) to move the support mechanism (4) thereby to change the adjustable back support board (3) in inclination angles;
**characterized in that**
- the reduction gear set (51) includes an annular gear wheel (55), a gear carrier (56), and a plurality of planetary gears (54) pivotally mounted on the gear carrier (56) respectively and engaged with the annular gear wheel (55).

2. The mechanism of claim 1, wherein
- the annular gear wheel (55) is connected to a manipulating element (52) rotatably mounted on one side of the main body (21);
- the gear carrier (56) has a plurality of stab shafts (561) extended from its one side, and a driving gear (57) extended from its another side for driving the driving force transmitting part (53); and
- the planetary gears (54) are pivoted on the stab shafts (561) respectively and each engaged with the annular gear wheel (55) thereby to receive a torque of the manipulating element (52) from the annular gear wheel (55) and transmit to the gear carrier (56) so as to drive the driving force transmitting part (53) to move by the driving gear (57).

3. The mechanism of claim 1 or 2, wherein the support mechanism (4) is formed as a support rack, movably pivoted between the driving force transmitting part (53) and a connecting portion (32) formed in one piece with the adjustable back support board (3), so as to support the adjustable back support board (3) in inclination.

4. The mechanism of claim 2, wherein the driving force transmitting part (53) has one end pivoted to the support mechanism (4), and another end formed with a geared portion (531) for engaging with the driving gear (57) thereby to be driven by the manipulating element (52).

5. The mechanism of any one of the preceding claims, wherein the driving force transmitting part (53) has one end formed with an elongated slot (532) for movably pivoting with the support mechanism (4).

6. The mechanism of any one of the preceding claims, wherein the driving force transmitting part (53) has one end formed with a slant (534) by which it can push the adjustable back support board (3) to move.

7. The mechanism of claim 1, wherein the support mechanism (4) includes a pair of flexible wires (6) connected between the adjustable back support (3) board and the driving force transmitting part (53), thereby to change the inclination of the adjustable back support board (3) in angle by moving the driving force transmitting part (53).

## Patentansprüche

1. Mechanismus zum Einstellen einer Rückenstütze einer Säuglingstrage (2), die einen Hauptkörper (21) besitzt, der mit einem Aufnahmeraum (26) für die Aufnahme eines Säuglings ausgebildet ist, wobei der Mechanismus umfasst:
- eine einstellbare Rückenstützplatte (3), die am Hauptkörper (21) innerhalb des Aufnahmeraums (26) angelenkt ist, um den Säugling zu stützen;
- einen Einstellmechanismus (5), der an einer Seite des Hauptkörpers (21) angebracht ist, wobei der Einstellmechanismus (5) ein Untersetzungsgetriebe (51) aufweist;
- einen Stützmechanismus (4), der zwischen dem Einstellmechanismus (5) und der einstellbaren Rückenstützplatte (3) schwenkbar ist; und
- einen Antriebskraft-Übertragungsabschnitt (53), der zwischen dem Einstellmechanismus (5) und dem Stützmechanismus (4) beweglich verbunden ist, wobei der Antriebskraft-Übertragungsabschnitt (53) durch die Hand eines Benutzers über das Untersetzungsgetriebe (51) angetrieben werden kann, um den Stützmechanismus (4) zu bewegen, um **dadurch** die Einstellwinkel der einstellbaren Rückenstützplatte (3) zu ändern;
**dadurch gekennzeichnet, dass**
- das Untersetzungsgetriebe (51) ein Hohlrad (55), einen Zahnradträger (56) und mehrere Planetenräder (54), die an dem Zahnradträger (56) jeweils drehbar angebracht sind und mit dem Hohlrad (55) in Eingriff sind, umfasst.

2. Mechanismus nach Anspruch 1, wobei
- das Hohlrad (55) mit einem Manipulationselement (52) verbunden ist, das an einer Seite des Hauptkörpers (21) drehbar angebracht ist;
- der Zahnradträger (56) mehrere Zapfwellen (561), die sich von einer seiner Seiten erstrecken, und ein Antriebszahnrad (57), das sich von seiner anderen Seite erstreckt, besitzt, um den Antriebskraft-Übertragungsabschnitt (53) anzutreiben; und
- die Planetenräder (54) an den Zapfwellen (561) jeweils schwenkbar sind und jeweils mit dem ringförmigen Zahnrad (55) in Eingriff sind, um **dadurch** ein Drehmoment des Manipulationselements (52) von dem Hohlrad (55) aufzunehmen und an den Zahnradträger (56) zu übertragen, um so den Antriebskraft-Übertragungsabschnitt (53) anzutreiben, damit er sich durch das Antriebszahnrad (57) bewegt.

3. Mechanismus nach Anspruch 1 oder 2, wobei der Stützmechanismus (4) als ein Stützgestell ausgebildet ist, das zwischen dem Antriebskraft-Übertragungsabschnitt (53) und einem Verbindungsabschnitt (32), das einteilig mit der einstellbaren Rückenstützplatte (3) ausgebildet ist, beweglich schwenkt, um die einstellbare Rückenstützplatte (3) geneigt zu halten.

4. Mechanismus nach Anspruch 2, wobei der Antriebskraft-Übertragungsabschnitt (53) ein Ende besitzt, das an dem Stützmechanismus (4) angelenkt ist, und ein weiteres Ende besitzt, an dem ein gezahnter Abschnitt (531) ausgebildet ist, um mit dem Antriebszahnrad (57) in Eingriff zu gelangen, um durch das Manipulationselement (52) angetrieben zu werden.

5. Mechanismus nach einem der vorhergehenden Ansprüche, wobei der Antriebskraft-Übertragungsabschnitt (53) ein Ende besitzt, an dem ein länglicher Schlitz (532) ausgebildet ist, um mit dem Stützmechanismus (4) beweglich zu schwenken.

6. Mechanismus nach einem der vorhergehenden Ansprüche, wobei der Antriebskraft-Übertragungsabschnitt (53) ein Ende besitzt, das mit einer Schräge (534) ausgebildet ist, mittels derer er die einstellbare Rückenstützplatte (3) zu einer Bewegung veranlassen kann.

7. Mechanismus nach Anspruch 1, wobei der Stützmechanismus (4) ein Paar biegsamer Drähte (6) aufweist, die zwischen der einstellbaren Rückenstützplatte (3) und dem Antriebskraft-Übertragungsabschnitt (53) verbunden sind, um **dadurch** den Neigungswinkel der einstellbaren Rückenstützplatte (3) durch Bewegen des Antriebskraft-Übertragungsabschnitts (53) zu ändern.

## Revendications

1. Mécanisme pour ajuster un support dorsal d'un porte-bébé (2) ayant un corps principal (21) formé avec un espace de réception (26) pour recevoir un bébé, le mécanisme comprenant :
- une plaque support dorsale ajustable (3) en pivotement sur le corps principal (21) à l'intérieur de l'espace de réception (26) pour supporter le bébé ;
- un mécanisme d'ajustement (5) monté sur un côté du corps principal (21), ledit mécanisme d'ajustement (5) comprenant un jeu d'engrenages de réduction (51) ;
- un mécanisme de support (4) en pivotement entre le mécanisme d'ajustement (5) et la plaque support dorsale ajustable (3) ; et
- une partie de transmission de force d'entraînement (53) connectée de façon mobile entre le mécanisme d'ajustement (5) et le mécanisme de support (4), ladite partie de transmission de force d'entraînement (53) pouvant être entraînée par la main d'un utilisateur via le jeu d'engrenages de réduction (51) pour déplacer le mécanisme de support (4) et changer ainsi la plaque support dorsale ajustable (3) quant à son angle d'inclinaison ;
**caractérisé en ce que**
- le jeu d'engrenages de réduction (51) inclut une couronne dentée annulaire (55), un porte-engrenages (56) et une pluralité d'engrenages planétaires (54) montés en pivotement sur le porte-engrenages (56) respectivement, et engagés avec la couronne dentée annulaire (55).

2. Mécanisme selon la revendication 1, dans lequel
- la couronne dentée annulaire (55) est connectée à un élément de manipulation (52) monté en rotation sur un côté du corps principal (21) ;
- le porte-engrenages (56) comporte une pluralité de troncs d'arbres (561) s'étendant depuis un de ses côtés, et un engrenage moteur (57) qui s'étend depuis son autre côté pour entraîner la partie de transmission de force d'entraînement (53) ; et
- les engrenages planétaires (54) sont en pivotement sur les troncs d'arbres (561) respectivement et chacun en engagement avec la couronne dentée annulaire (55) pour recevoir ainsi un couple de l'élément de manipulation (52) depuis la couronne dentée annulaire (55) et le transmettre au porte-engrenages (56) de manière à entraîner la partie de transmission de force d'entraînement (53) pour la mettre en mouvement par l'engrenage moteur (57).

3. Mécanisme selon la revendication 1 ou 2, dans lequel le mécanisme de support (54) est formé comme une crémaillère de support, mobile en pivotement entre la partie de transmission de force d'entraînement (53) et une portion de connexion (32) formée d'une seule pièce avec la plaque support dorsale ajustable (3), de manière à supporter la plaque support dorsale ajustable (3) en inclinaison.

4. Mécanisme selon la revendication 2, dans lequel la partie de transmission de force d'entraînement (53) comprend une extrémité en pivotement sur le mécanisme de support (4), et une autre extrémité formée avec une portion dentée (531) destinée à être engagée avec l'engrenage moteur (57), pour être ainsi entraînée par l'élément de manipulation (52).

5. Mécanisme selon l'une quelconque des revendications précédentes, dans lequel la partie de transmission de force d'entraînement (53) comprend une extrémité formée avec une fente allongée (532), pour se déplacer en pivotement avec le mécanisme de support (4).

6. Mécanisme selon l'une quelconque des revendications précédentes, dans lequel la partie de transmission de force d'entraînement (53) comporte une extrémité formée avec une partie oblique (534) par laquelle elle peut pousser la plaque support dorsale ajustable (3) pour la déplacer.

7. Mécanisme selon la revendication 1, dans lequel le mécanisme de support (4) inclut une paire de fils flexibles (6) connectés entre la plaque support dorsale ajustable (3) et la partie de transmission de force d'entraînement (53), pour changer ainsi l'inclinaison de la plaque support dorsale ajustable (3) en angle en déplaçant la partie de transmission de force d'entraînement (53).
